# EUROPEAN PATENT SPECIFICATION

(11) **EP 4 011 461 B1**
(45) Date of publication and mention of the grant of the patent: **25.02.2026**
(21) Application number: 21425060.7
(22) Date of filing: 07.12.2021
(51) Int. Cl.: A62D 3/40, B09B 3/00, C04B 33/04

(54) **DIGITIZED INERTING PROCESS IN A PROTECTIVE ATMOSPHERE IN A CONTINUOUS LINE INDUSTRIAL PLANT FOR THE INERTIZATION OF SILICATES AND ASBESTOS MATERIALS AND APPARATUS**
DIGITALISIERTES INERTISIERUNGSVERFAHREN IN EINER SCHUTZATMOSPHÄRE IN EINER KONTINUIERLICH ARBEITENDEN INDUSTRIEANLAGE ZUR INERTISIERUNG VON SILIKATEN UND ASBESTWERKSTOFFEN UND VORRICHTUNG.
PROCÉDÉ D'INERTAGE NUMÉRISÉ DANS UNE ATMOSPHÈRE DE PROTECTION D'UNE INSTALLATION INDUSTRIELLE DE LIGNE CONTINUE POUR L'INERTISATION DE MATÉRIAUX DE SILICATES ET D'AMIANTE, ET DISPOSITIF

(30) Priority: 14.12.2020 IT 202000030653
(43) Date of publication of application: 15.06.2022
(73) Proprietor: Tuccitto, Paolo, 52014 Poppi (AR) (IT)
(72) Inventor: Tuccitto, Paolo, 52014 Poppi (AR) (IT)

(56) References cited:
- EP-A1- 2 027 943
- KR-B1- 101 647 603
- PAOLINI VALERIO ET AL: "Asbestos treatment technologies", JOURNAL OF MATERIAL CYCLES AND WASTE MANAGEMENT, SPRINGER JAPAN, TOKYO, vol. 21, no. 2, 21 September 2018 (2018-09-21), pages 205 - 226, XP036714816, ISSN: 1438-4957, [retrieved on 20180921], DOI: 10.1007/S10163-018-0793-7
- WITEK JERZY ET AL: "Obtaining an Artificial Aggregate from Cement-Asbestos Waste by the Melting Technique in an Arc-Resistance Furnace", vol. 7, no. 2, 10 September 2019 (2019-09-10), pages 10, XP055835663, Retrieved from the Internet <URL:https://www.mdpi.com/2079-6439/7/2/10/htm> [retrieved on 20210828], DOI: 10.3390/fib7020010
- STANDARD IRISH ET AL: "Chemical analysis of refractory products by X-ray fluorescence (XRF) -Fused cast- bead method (EN ISO 12677:2011)", 1 October 2011 (2011-10-01), pages 1 - 14, XP055835664, Retrieved from the Internet <URL:https://infostore.saiglobal.com/preview/98700734283.pdf?sku=881499_SAIG_NSAI_NSAI_2093945> [retrieved on 20210827]
- GUALTIERI A F ET AL: "Thermal decomposition of asbestos and recycling in traditional ceramics", vol. 20, no. 9, 1 August 2000 (2000-08-01), pages 1409 - 1418, XP004207607, ISSN: 0955-2219, Retrieved from the Internet <URL:https://reader.elsevier.com/reader/sd/pii/S0955221999002903?token=C106F4C65E9CCE9E7531152E5C45DC7BFBF27A67E7F5CBE23477E3C704DC6A8114A020EF0990C423F84C2EE4EEC04608&originRegion=eu-west-1&originCreation=20210827135355> [retrieved on 20210827], DOI: 10.1016/S0955-2219(99)00290-3

## Description

The digitization of production processes is an integral part of Industry 4.0, aimed at introducing new systems for the application of technologies aimed at improving productivity, working conditions and consequently, respect for the environment.

Asbestos is the general designation applied to a Group of Silicates which occur naturally in a Fibrous form. There are six main minerals of Asbestos which are divided into two Groups whose structures differ in Serpentine and Amphibole. The Serpentine Group includes only one fibrous mineral silicate, the Chrysotile. The other five forms of Asbestos belong to the type of Amphibole, having a chain structure such as Actinolite and Tremolite, Crocidolite with a fibrous form of Riebeckite, finally Anthophyllite and Amosite with a fibrous form of grunerite. Asbestos minerals are Natural Silicates Hydrates which, at high temperatures, release water, decomposing. This process leads them to changes in the crystal structure and the formation of new phases without the dangerous properties. The term Serpentine is a generic term as it indicates a set of minerals, plus precisely a group of common silicates of basic and ultra-basic metamorphic rocks, quite abundant in the oceanic lithosphere, which play an important role in the global water cycle. By Serpentine we mean the polymorphic modifications of the compound Mg3 Si2O5 (OH) 4, chemical formula of Chrysotile but also of Antigorite and Lizardite. Antigorite is the most stable mineral of the Serpentine Group at the highest temperatures; it was formed during the metamorphic phases, at temperatures over 600°C, on the contrary Lizardite and Chrysotile were formed at lower temperatures and therefore very close to the earth's surface. But if the chemical formula is the same, we must ask ourselves what differentiates these minerals from each other. All Serpentines belong to Phyllosilicates: each SiO₄ Tetrahedron shares three vertices, forming rings of six Tetrahedra and therefore a multi-layered structure. The terminal vertices of the individual Tetrahedra can be oriented to one side or the other of the layer. Various structural possibilities arise from this. In these minerals the terminal Oxygen Atoms of a layer, defined Tetrahedral, interact with Mg2+ cations, in turn joined by OH- anions. Therefore, Layers of Tetrahedra alternating with Layers of Octahedra are formed. But there is a problem: the different dimensions of an Octahedron compared to a Tetrahedron. This determines tensions in the structure of the Serpentine. To compensate for the differences in size of the Octahedral Layer compared to the Tetrahedral Layer, distortions occur in the different Polymorphs of Serpentine. Based on the distortion and arrangement of these two layers we have the different varieties of Serpentine. In Lizardite there is Al-Si vicariance in the Tetrahedral Layer: this determines modest rotations of the Tetrahedrons with respect to the Octahedra. The result is a planar distribution of the strata. In the Antigorite the tension between the different layers is compensated by the rotation of the Tetrahedral Layer: the free apexes of the Tetrahedra point periodically from one side or the other of the Silicate Layer. The result is a Lamellar Structure. In Chrysotile the tensions between Octahedral and Tetrahedral Layers are not compensated: they are rolled up to form cylinders. The structure of Chrysotile is therefore made up of fibrils composed of concentric or spiral layers around the axis of the fiber. Because the layers tolerate limited curvature, the curvature is less on the inside than on the outside. The cylinders therefore remain hollow. The result is the fibrous aspect of the mineral. Therefore, among the main Serpentines, only Chrysotile has the fibrous structure and is classified as Asbestos. However, a secondary Serpentine, often associated with Chrysotile, the Balangeroite, should also be remembered. It too fibrous, as for Chrysotile, generates dust that is dangerous for human health.

The use and applications of Asbestos are lost in ancient history; embalmed bodies were found and wrapped in asbestos cloths dating back to 2.000 / 3.000 BC by Egyptian Pharaohs; the ancient Greeks used to wrap the bodies of the dead in asbestos shrouds before burning them so as not to confuse their ashes with those of the fire itself; in Finland, clay pots dating back to 2.500 BC contained asbestos fibers and were believed to strengthen the pots and make them fire resistant. However, while exploiting its properties, the ancient Romans documented the harmful effects of those who extracted the silk material from the ancient stone quarries. In 1800 the Italian government used asbestos fibers in its banknotes. The most diverse activities and uses were then handed down to more recent history.

The present invention is defined by the method of claim 1 and the apparatus of claim 9.Further embodiments are given in the dependent claims.

The process was tested in heat treatment plants using Protective Gas Atmospheres, on Serpentine Asbestos, Amphibole Asbestos and on materials containing Cement and Asbestos. The results obtained confirm the thesis that the products rendered inert, according to the legislation that classifies the Secondary Raw Material, can be destined for the recycling of products for the Cement, Ceramics and Refractories industries, in the Powder Metallurgy industry, for production of Nanomaterials and Biomaterials, in the Aerospace, War and Defense Industry for Military applications and technologies, for the production of Technical Compounds and Elastomers, for the manufacture of Plastic Materials and Thermoplastic Polyurethanes and, finally, in the Goldsmith industry for the production of jewelry. The process is based on the Four Directives of the last industrial revolution launched just in 2016: the first Directive concerns the use of data, computing power and connectivity and is divided into Big Data, Open Data, Internet of Things and Cloud Computing, for the centralization of information and their conservation; the second is that of Analytics, or data collection and analysis, from which to derive value; the third director is the 'interaction between man and machine, which involves the increasingly popular "Touch" interfaces and augmented reality. Finally, there is the whole sector that deals with the transition from digital to real and which includes additive manufacturing, 3D printing, robotics, communications, machine-to-machine interactions and new technologies to store and use the energy in a targeted way, rationalizing costs and optimizing performance. The process was born respecting the Fundamental Postulate of Lavosier, year 1789, Law of Conservation of Mass, according to which "Nothing is created, nothing is destroyed, everything is transformed". This concept is now interpreted in the Circular Economy, which has become European Law and published in the Official Journal of the European Union with No. 150 of 14 June 2018. Using industrial technologies already in use since the 1930s for the heat treatment of metals, in particular of steels, for the brazing and sintering of powder metallurgy products and the main techniques of Thermal Analysis and specific instrumentation, the thermal behavior of asbestos minerals has been clarified with the result of the disappearance of the dangerous structure and the characterization of products to be reused or recycled and sold in a totally safe way for the environment and human health. In our economy, in fact, we often talk about recycling and reuse but without grasping the different meaning. To recycle it means transforming a waste into a new material or into a new object having the same value or a higher value. The purpose is precisely to recover waste materials and transform them into new materials. Recycling a product means destroying it and then subsequently giving it a new life. The only flaw is the necessary energy expenditure. Reuse, on the other hand, is that process of regenerating products or materials that have not yet become waste or scraps, to be reused again for the same purpose and maintain their value. Reuse guarantees greater energy savings than recycling. Alongside these two terminologies we often find the adjective "creative", which makes their meaning much broader and more inviting, thus stimulating our imagination to arrive at the creation of new objects. The process described in this Patent is applied to an industrial plant built inside a room with controlled ventilation, at a factory in an industrial area or inside a landfill. All components are made of non-combustible materials. The process atmospheres are controlled inside the heating chamber. With the patent n ° 25588/2017, the undersigned Inventor had introduced heat treatment in a controlled atmosphere. Today, after further years of studies and research outside the Italian National Territory, we can consider mature the knowledge in the use of protective atmospheres that required a high level of knowledge in the field of automation, control engineering, electronics and chemistry that we can, of below, summarize. Probably many atmospheric air ovens will over time be replaced with those that use protective gases and this Privative will help those involved in such change activities. However, although temperature and atmosphere control is well understood and generally practiced, the atmosphere of some heat treatment furnaces remains uncontrolled. Compared to conventional furnaces, all the loading and operating parts of a protective atmosphere furnace must withstand the various chemical reactions of the component gases of the atmosphere. In case of non-electrically heated furnaces, the heating and working chambers must be separated from each other. The volume of protective gas required depends on the following factors: type and size of the furnace, type of access for loading and unloading, displacement, quantity and size of the charge and process used. The protective atmosphere furnace, used in the Inertization process, can be of the discontinuous or continuous type. Examples of batch furnaces are: pit furnace, bell furnace, muffle furnace, general purpose furnace, etc., continuous furnaces include among others, pusher furnaces, roller furnaces and tower furnaces. In choosing a Controlled Atmosphere to be used during heat treatment, the following factors must be taken into consideration: the nature of the heat treatment process to be performed, the availability of the basic combustible gases, the degree of control desired, the costs involved, etc. In many cases no selection is necessary because the type of Protective Atmosphere to be used is determined by the process itself; if, on the other hand, there is the possibility of selection, from a technical point of view, the limitations will often be imposed by the availability of base gases. A little mention of the history: In the United States, protective gases were used in furnaces for the hardening of high-speed steels since the 1960s, however, the heat treatment of low thickness aluminum semi-finished products such as sheets, foils and wires, was started since the 1950s. The development in Europe in the use of such plants, on the other hand, has not had the same spread. In America, the use of specific units or gas generators dates back to the early 1930s and fuel combustion was regulated by careful control of the air-fuel ratios. The gaseous atmosphere produced was often referred to as the burnt gas, but is now known as the exothermic gas. Exothermic gas contains large amounts of Nitrogen along with smaller amounts of Carbon Monoxide and Hydrogen, which are reduced along with Carbon Dioxide and Water Vapor. Two main classes of exothermic atmospheres are recognized, Rich and Lean, which differ in their lower air/gas ratio in the content of Carbon Dioxide and Hydrogen. The need already in the 1930s, to reduce the levels of oxidizing carbon dioxide and water vapor in these atmospheres, developed endothermic gas generators, using an external heating and a catalyst, with only 20 to 40% air. There are atmospheres prepared from Nitrogen / Hydrogen, from Ammonia and those obtained from compressed gases in cylinders such as Nitrogen, Hydrogen, Argon etc. Still in the American territory and for heat treatment purposes, controlled atmospheres were however used for the first time between 1920 and 1930. Since the 1970s, vacuum heat treatments have been increasingly used in which protection is carried out by preventing that metallic objects came into contact with essentially any atmosphere. Controlled atmospheres are mainly required for heat treatment of metals, annealing by decarburization of machinable cast irons, reducing brazing of mild steel and sintering of powder metallurgy products, i.e., where metals need to be protected at elevated temperatures during production. Today the use of these technologies in the Asbestos Inertization Process and Asbestos Containing Materials is an absolute novelty in the world. The gaseous components of the most common Controlled Atmospheres are the following: Oxygen, Nitrogen, Carbon Dioxide, Hydrogen, Water Vapor, Sulfuric Acid, Carbon Sulfide, Methane and other hydrocarbons having the CxHy form. Asbestos and the Protective Atmosphere form an integral closed system in which chemical reactions reach a form of equilibrium. In dealing with the behavior of gas mixtures, Dalton's law is used which states: "If more gases that do not react chemically with each other are introduced into the same container, the pressure of the resulting mixture is equal to the sum of the pressures that would have been observed if each gas was enclosed separately in that container". Atmospheres have been tested, in plants similar to each other in many respects, with endothermic gas, rich gas, exothermic gas lean, based on nitrogen prepared from rich exothermic gas by removing CO2 and H2O and with almost pure nitrogen, 97%, prepared from lean exothermic gas and finally in dissociated ammonia atmosphere.

Below we describe the main characteristics found in the use of the different atmospheres, used for the Inertization Process:
- The atmospheres of Exogas are made up of reducing components such as carbon monoxide and hydrogen or, oxidants such as carbon dioxide and water vapor and neutral such as nitrogen and, may also contain traces of methane. A lean exogas contains only 5 to 10% of combustible gases such as carbon monoxide and hydrogen. Conversely, the rich blend contains higher percentages of these gases. Exothermic gases can also contain Oxygen resulting from an incomplete reaction in the retort or from the uptake of Oxygen from the cooling water during direct cooling. The base gas is always burned with insufficient air, the air factor is usually about 0.8; for this reason, it is not possible to find oxygen in the gaseous atmosphere. The exogas generated in the retort of a generator contains a relatively large amount of carbon dioxide and water vapor. Exothermic Atmospheres are the cheapest of the generated atmospheres and require minimal generator maintenance. The main parts of an exothermic gas generator are: mixer, retort, gas cooler and dryer. The mixing equipment provides an appropriate ratio of air to base gas. The resulting hot gas mixture is quenched and most of the water vapor produced during the combustion reaction is stored and removed. Air and gas enter the flowmeter, through a filter and valve. After being mixed in the mixer, the mixture passes to the retort. The gas leaving the retort is collected in a cooler filled with cooling water. Drying is carried out by the pressure dryer. The prepared gas enters the Oxygen remover, then, passing through a catalyst, leaves the system as a purified gas, free of oxygen. The heating equipment is thermostatically controlled.
- The Endogas Atomospheres are mainly made up of Carbon Monoxide, Carbon Dioxide, Nitrogen, Water Vapor, Hydrogen. These are characterized by a greater lack of air than other atmospheres; Due to insufficient air for free combustion, the nature of the reaction is endothermic, i.e., the combustion process can only be maintained by external heating because the heat released during the process is not sufficient to maintain the reaction. The greater the quantity of air mixed with the combustible gas, that is, the greater the air-gas ratio used, the lower the quantity of Hydrogen and Carbon Monoxide and the greater the content of Carbon Dioxide and Water Vapor in the atmosphere. We can use methane, propane, butane, city gas, etc. as fuel. City gas is essentially a mixture of carbon monoxide, hydrogen and nitrogen from the air; it is suitable for use as a base gas only when its sulfur content is low. The requirements for these fuels to be used as base gas are: absence of impurities such as dust, oil, sulfur compounds, etc., which cannot be tolerated in a controlled atmosphere or protective gases; secondly, constant chemical composition is important because it affects the composition of the generated protective gas. The absence of oxygen is also an important factor as it will control the amount of water vapor in the controlled atmosphere. Essentially two main types of endogas are used, the so-called lean and rich atmospheres. The difference between the two main types is that the rich atmosphere contains more Hydrogen and much less Nitrogen than the lean one. The part of the system where the mixing of the base gas and the air takes place consists of flow meters, pressure gauges, valves and compressors. A catalyst was used in the retort to accelerate the reaction. The gas leaving the retort is then cooled in an appropriate cooler and subjected to further treatment. The main advantages found in the use of endothermic-based atmospheres are the cost of the generator and its maintenance in relation to the generators of the other atmospheres, which is relatively low although the nickel catalyst is relatively expensive. The disadvantage is the tendency to precipitate Carbon and they are also explosive due to their high content of Hydrogen and Carbon Monoxide. In the generation of both exothermic and endothermic atmospheres, the reaction occurs in two stages from 900 to 1.000°C. In the first stage the mixture of air and combustible gas is almost completely burned. This reaction is exothermic and generates heat. In the second phase the combustion products are dried; water vapor is removed and a carefully controlled proportion of hydrocarbon fuel is added to the stream which is then reacted in contact with a catalyst. This last reaction is endothermic and the retort requires external heating.
- The Nitrogen Atmosphere is produced by the exothermic combustion of hydrocarbon fuels with a minimum lack of air but Nitrogen can also be obtained from the air which makes it much cheaper. Therefore Monogas is essentially Nitrogen prepared from purified lean exothermic gas. The purpose of the purification is to reduce the content of water vapor, carbon dioxide and sometimes carbon monoxide, as these gases could affect the inertization process. The production method of the Nitrogen or Monogas base differs from each other only in the way in which the carbon dioxide content is removed from the gas. The carbon dioxide removal unit is therefore an essential part of the single gas generator equipment. In practice, three types of carbon dioxide removal methods are used, namely: pressurized washing, alkaline washing and molecular sieve method; the latter method, which we used also for the removal of water vapor, regulating temperature and pressure. The thermal cycling and pressure methods are referred to as "thermal swing" and "pressure swing" methods, respectively. Monogas can also be used as a Sintering Atmosphere, as for the realization of shapes and objects after the Inertization and Grinding Process of Forsterite and Larnite but, due to its lower thermal conductivity, the cooling time of the material being processed will be longer than protective gases containing more hydrogen, such as that prepared by the dissociation of ammonia, which can also contain 75% hydrogen.
- The atmosphere obtained from ammonia is prepared in a different way and is composed of only two components. Ammonia is used to prepare three types of Protective Atmospheres consisting of Hydrogen and Nitrogen. Generally, an operating temperature of 1.000°C is used. This atmosphere, made up of Hydrogen and Nitrogen, differs from other atmospheres mainly due to the fact that it is absolutely dry and does not contain carbon dioxide or carbon monoxide. Ammonia cylinders are mounted on a tilting frame in order to facilitate the dispensing of Ammonia as a liquid. Each battery consists of one or more cylinders with interconnected pipes. Depending on the position of the magnetic valves, Ammonia is supplied by the coil that is selected. Switching from one battery to the other takes place automatically in order to ensure a continuous supply of ammonia. Switching is initiated by a pressure control instrument which makes contact when the pressure drops below a preset value. The pressure of the ammonia vapor leaving the vaporizer is reduced in the reducer to a pressure corresponding to 800 - 1.000 mm of water column. This pressure is indicated by a pressure gauge and the pressure reducer is adjustable. This part of the equipment is protected against excessive pressure by a special control instrument. If the permissible pressure is exceeded, a magnetic valve in the supply line closes and simultaneously the horn beeps. The ammonia vapor is then passed through the pipeline to the retort, stored with a catalyst, where the ammonia decomposes to form hydrogen and nitrogen. The retort is built into the oven and is heated externally by electricity. In addition to the general safety factor, attention is drawn to two specific areas of Cracked Ammonia generators; one, are the physiological effects of ammonia in the air in various concentrations, the others are that the protective gases produced by the decomposition of ammonia are explosive due to their high hydrogen content. Since pure Nitrogen is not explosive, it is used to purge the oven and pipes before introducing Cracked Ammonia. The use of this atmosphere has the advantage of uniformly high quality and purity but, at the same time, the disadvantage that its cost is generally higher than those atmospheres produced by the combustion of hydrocarbons. Using an afterburner, it is possible to produce atmospheres containing from 0 to 75% hydrogen, but in practice the hydrogen content is limited from 1 to 30%. If the hydrogen content is less than 4-5%, the atmosphere is no longer explosive.
- The Vacuum Heat Treatment is also one of the heat treatment technologies in a Protective Atmosphere successfully tested for Asbestos Inertization. With this type of treatment, which has technologies that can even exceed 1.450°C, the Asbestos-Containing Material, such as Eternit sheets, is heated to a pressure lower than atmospheric pressure. In the strict sense of the word, "void" means a space devoid of air; in reality, however, there is gas also present in another "high vacuum". Vacuum as a heat treatment atmosphere has the following advantages. The atmosphere is less contaminated than any other protective atmosphere. During the heat treatment carried out in a Controlled Atmosphere, it is preferable to periodically purge the atmosphere of the furnace which involves loss of protective atmosphere; the vacuum heat treatments, on the other hand, do not require purging. It is not explosive like most protective atmospheres and it is non-toxic. The vacuum also has its drawbacks: it may be difficult to work in a continuous automation system as described below. The operation of vacuum ovens can be very intricate and some unwanted side effects can also develop; for example, with an accelerated process some elements, should they be more volatile, could evaporate. The main parts of a vacuum heat treatment furnace are: the vacuum retort, the heating system, the gas quenching system and, of course, the pumping system to provide the vacuum. The quality of the vacuum used in the course of vacuum heat treatments is characterized by the pressure or by the degree of contamination of the atmosphere. After the application of the vacuum, the atmosphere of the furnace will be constituted first of all by water vapor, some hydrogen and nitrogen as well as by the vapor of organic and inorganic matter present in the system; no asbestos fibers in the atmosphere were analyzed during the treatment tests. In any case, for each type of process that will be planned, suction systems, filters, etc. must be provided. as necessary, for the purposes of safety for workers and the environment.

PAOLINI VALERIO ET AL: "Asbestos treatment technologies",JOURNAL OF MATERIAL CYCLES AND WASTE MANAGEMENT, SPRINGER JAPAN, TOKYO, vol. 21, no. 2, 21 September 2018 (2018-09-21), pages 205-226, XP036714816,ISSN: 1438-4957, DOI: 10.1007/S10163-018-0793-7 discloses a known prior art.

Below we will start the description of the entire Inertization System with automatic digitized operation. This process is combined with the ordered sequence of three transformation stages of Asbestos materials, which are: The first is associated with the loss of adsorbed water; The term adsorption should not be confused with absorption. The distinction consists in the gaseous, liquid or solid phase, in which the material that is deposited on the surface is found. In the case of adsorption, these are molecules in a gaseous state; in the other of molecules in the liquid or solid state. The second is called "Process of Dehydroxylation", also known with the term Dehydroxylation or Dehydroxylation and is connected to the removal of OH groups from the structure of Asbestos Minerals where, by heating the OH hydroxyl group, their release occurs, forming a water molecule. The last stage is responsible for the crystallization of the amorphous material which leads to the formation of new phases without a dangerous fibrous structure. In the case of Chrysotile Asbestos, the most abundant and most widely tested, the results obtained have shown, with the combined loss of chemical water, to transform into an anhydrous phase, called Methacrysotile, at a temperature of 500°C up to 750°C. A rapid recrystallization of the anhydrous phase then occurs in the stage above 800°C. The main product of this transformation is Forsterite, Mg₂SiO₄ and Enstatite, MgSiO₃, the latter element which can also form at higher temperatures. During the tests other amorphous material was also detected in minimal percentages. The mineral obtained from the process, however, no longer contains any fibrous structure. Research on the possible effects of Forsteritis on human health reassure about carcinogenicity results, such as the study published by IARC in 1989 conducted by the Cesare Maltoni Cancer Research Center titled "Non-occupational exposure to mineral fibers" and the published study from the scientific journal Tandfonline of London referred to the International Forum for Respiratory Research in 2009, Inhalation Toxicology, titled " Forsterite exposure causes less oxidative DNA damage and lung injury than chrysotile exposure in rats" conducted by the Universities of Kitasato of Tokyo and Santa Marianna of Kawasaky . As mentioned above, the transformations are represented by the following path reaction:

Mg₃ Si₂ O₅ (OH₄) -> Mg₃Si₂O₇+2H₂O -> Mg₂ SiO₄ -> MgSiO₃

| Chrysotile | Methachrysotile | Forsterite | Enstatite |
|---|---|---|---|
| Dehydroxillation Between 600 up to 750 °C | Breakage of the mineral structure e appearance of amorphous structure (endothermic peak 700 up to 750 °C) | | Crystallization (exothermic peak 800 up to 850°C) |

The procedure was analyzed with techniques in which the physical properties of the asbestos, subjected to the controlled heating and cooling program, were measured as a function of temperature and time. Thermo-gravimetric, TGA and thermo-differential, DTA or calorimetric analyzes, DSC, simultaneously, STA and thermo-dilatometric analyzes, TDA, were adopted under conditions of the various gas flows as described above. Below is a brief explanation of the analysis techniques used:
Thermo-Gravimetric Analysis - TGA - The weight of the sample, during the program, is monitored as a function of temperature or time.

Differential Thermal Analysis - DTA - The temperature detected on the asbestos sample was compared with a thermally inert sample to compare the difference in temperature as a function of the time or temperature to which they are subjected. The DTA method allowed us to record the exo / endothermic transformations that occurred in the materials subjected to treatment.

Differential Scanning Calorimetry - DSC - Records the energy required to keep the temperature difference between the sample and the reference zero, as a function of time or temperature.

Simultaneous Thermal Analysis - STA - The simultaneous execution of TGA and DTA or DSC analysis allows us to distinguish between any allotropic transformations, fusions, etc. and phenomena, for example, decomposing.

Transmission Electron Microscopy - TEM - Instrumentation that allows us in terms of resolution and magnification, to also analyze the internal structure of the fibers and obtain information on the crystalline structure.

X-Ray Diffractometry - DRX - Recognizes to determine the weight concentration of Asbestos, the mineralogical type of the fibers and obtains information on the crystalline structure after treatment.

The industrial thermal process is carried out with analysis techniques that allow the detection of endothermic and exothermic reactions, each of which characterized by temperature peaks which result in the destruction of the relative structure and the formation of new compounds. The time required to complete the industrial process, which involves the opening of the watertight container containing the asbestos materials through the use of anthropomorphic robots, the unloading of the plates into the line conveyor and the crossing of the drying and inerting sections and cooling down to unloading is up to 4 hours. The process can be designed in a continuous cycle or, through the use of batch ovens with interrupted sections, defined as discontinuous.

The description of the process continues online. Once the container has been discharged into the line 1 compartment, line 2 will be discharged and vice versa. The inerting line is designed in differentiated heating sections, connected by a conveyor that can be roller, refractory steel mesh or with Nickel and Chromium, Nichrome 5, or Manganese and Titanium steel mesh. The first section of the system is formed by the heating oven, whose temperatures are between 60 and 200°C. To complete the dehydration procedure, the material to be treated takes between 1 and 2 hours. For the Inertization section, having chosen one of the basic atmospheres of the furnace described above, between lean and rich atmospheres, exo, endogas as well as the prepared nitrogen, monogas and dissociated ammonia atmosphere, we proceed to start the process. In this section, operating temperatures range from 850 to 1.230°C. On the choice made, in most generators, the combustible gas reacts with a controlled lack of air with differences in the degree of air shortage and in the post-treatment of the atmosphere generated. The part of the combustion system where the mixing of the base gas and air takes place consists of flow meters, pressure gauges, valves and compressor. The residence time on the temperature step, regulated by the speed with which the sheet normally travels the Inertization section, is between 30 and 60 minutes.

The objectives of this process are as follows:
- demonstrate that the acicular, amphibious and serpentine structure of asbestos fibers can be modified, transforming the chemical and structural characteristics of the mineral in a short time and with more convenient treatment costs than landfill disposal;
- document that the process is safe for both the worker and the community, definitive and irreversible;
- demonstrate that Forsterite, Enstatite, Egirina, Ferrosilite, Magnetite, Hematite and any amorphous material, deriving from the Inertization process, do not cause inflammation of the cellular DNA;
- state that the raw material obtained from the inertization process can be reintroduced into the industrial and artisanal market and recycled in multiple industrial applications;
- train new professionals for remediation activities, or figures capable of possessing an overview of new opportunities for recycling and reuse;
- start the design and development of new materials, products and processes that favor the transition to an organization of innovative and sustainable models;
- share scientific knowledge on the thermal behavior of asbestos minerals;
- create networks between universities, industrial companies and public administrations, share new scientific knowledge, production capacity and socio-economic issues, towards better waste management, greater protection of people, health and the environment and the conservation of resources;
- planning training activities, through the organization of short courses for university students, doctoral students and post-doctoral students, on topics related to Asbestos, Environmental Economics, Circular Economics, Sustainability and Advanced Materials Characterization Techniques;
- design dissemination activities for masters and doctoral students, for internal communication and for all interested parties, including the scientific community, through publications in relevant journals and active participation in National and International Conferences;
- make suggestions for political decision-making for asbestos waste management options with the aim of increasing funding for research into the most innovative strategies;
- proceed with the registration of the "substances" pursuant to REACH with the European Chemicals Agency ECHA, as the final objective of the intention to reintroduce the raw material produced by the process onto the market and declare the cycle of Circular Economy complete.

Below is the description of the industrial treatment plant that will be built inside a vacuum chamber equipped with a forced ventilation system and an aspiration system with HEPA filters, for example Hepa Ulpa H14, with activated carbon, ceramic filters and quality other is better available on the market.

We list the stages of the process:
- Tracking and digitization procedure for the withdrawal from the treatment plant of watertight containers containing asbestos materials;
- Entrance to the container plant with shattle systems;
- Container opening with anthropomorphic robots;
- Updating procedures for digitizing the origin and acceptance of materials;
- Suction, washing and return of watertight containers;
- Positioning of materials on the belt conveyor;
- Low temperature heat treatment;
- Transfer to trays in the high temperature process line;
- Heat treatment in a protective atmosphere;
- Cooling of materials;
- Unloading in the parking line;
- Quality control analysis with instruments suitable for the identification of fibers and characterization of the treated material;
- Data update and coupling to the unloading lines;
- Automatic handling in the outlet sections of the inertized material;
- Unloading, storage, packaging and digitization of the destination routes of the Secondary Raw Material.

### Process description:

The asbestos materials, after being removed, are placed in watertight containers made of galvanized steel sheet or, in high-performance polymers or, in heat-resistant plastic material, with smooth walls and double hydraulic opening on both the frame higher than on the side. Each container is identified with its own serial number, placed on the outside of the frame clearly visible and with a GPS tracking device installed with a shockproof protection system. The operator will take steps with appropriate instrumentation, to record the empty and full load weights, updating the data on the electronic register. The removal, loading, transport operations are traced from the reclamation site to its destination at the plant in Treatment. The dimensions of the watertight containers, for the different type of material, can be of various sizes: the width from 1 to 2 meters, the length from 1 to 4 meters, the height from 1 to 2 meters, equipped with feet of parking and hooks for displacements and lifting. The fully loaded weight, however, cannot exceed 1.000 kg.
- The containers will be unloaded on special platforms identified within the treatment site and moved by shuttle systems in pre-defined routes. The brittle asbestos materials will be placed on high melting point alloy trays and placed on the belt conveyor. The premises are defined as the red zone, forbidden to the entrance of personnel except for extraordinary operations of verification, control and maintenance of the ovens and the various equipment.
- All the rooms are equipped with suction lines with Hepa Ulpa H14 filters. The suction channels are equipped with switches for automatic line deviation and thus allow maintenance operations, replacement of the filters which, for each section of the system, will be determined on the basis of the nominal air flow. The filters will be able to operate at temperatures up to 250°C.
- The containers will be opened by anthropomorphic robots that will unload and place them on the conveyor belt.
- The container, now empty, is lifted by the shuttle system and taken to the reclamation section. After being immersed in an industrial tank containing water-based fluid, mechanical arms will move lances at moderate pressure. The water is conveyed into successive settling tanks equipped with devices and filters, all forming part of a closed-circuit system. At the end of the operation, lasting a maximum of 15 minutes, the containers will be taken outside and ready to be reused again.
- The Asbestos material begins its journey on the conveyor which can be made of refractory steel mesh, with a rolling system, with Nickel and Chromium fabric, Nichrome 5, or in Manganese and Titanium steel. The material, for example plates of eternit, is transferred to the segmented heating section which runs at a constant speed with a permanence of 1 to 2 hours, at a temperature from 60 to 200°C, for then going to the inerting section.
- In the heat treatment section in a protective atmosphere, automatic equipment will be activated for continuous analysis on the composition of the gaseous atmosphere. In choosing among those described to be protected during heat treatment, it is necessary to take into consideration the following factors: the nature of the material to be processed, the availability of basic combustible gases, the desired degree of control, the costs involved. In most generators a combustible gas reacts with a controlled lack of air, the differences are in the degree of air shortage and in the post-treatment of the atmosphere generated. The reactions that take place in the generators are promoted by the use of catalysts incorporated in the retort of the same. The part of the system in which the mixing of the base gas and the air takes place consists of flow meters, pressure gauges, valves and compressor. The gas-air mixture reacts in the retort or combustion chamber to form a prepared and controlled atmosphere. Any protective gas, including carburizing gas, can be safely introduced into an oven or retort having a temperature above 850°C called ignition temperature. We will have no risk of explosion, as the flammable component of the gas will ignite and burn. The oven temperature can therefore be increased up to 1.230°C. The burning will last until the air in the oven is exhausted. In the production of rich and lean exogases and lean gas for single gas production, the reaction is exothermic and self-supporting. In the production of endogas, the retort requires heating because the process is endothermic. A catalyst is used in the retort to speed up the reaction. The gas leaving the retort is then cooled in an appropriate cooling device. The gases leaving the cooler are often subjected to further treatments. Oxygen impurities can be reacted with the present hydrogen using a catalyst, forming water vapor. The drying of the gas, reducing the water vapor content, is usually carried out by means of solid absorbents such as molecular sieves, also suitable for simultaneously reducing the carbon dioxide content. Gas analyzers will provide information, quickly and continuously, on the composition of the gaseous atmosphere, during the actual processing and therefore represent an improvement of the laboratory analyzes. Accuracy is an obvious requirement but quick response is also a key requirement, as analyzers are sensing tools used for control purposes. For example, a slight change in the concentration of hydrogen will cause a considerable change in the thermal conductivity of a gas mixture. The generators are equipped with a series of safety devices to prevent explosive gas mixtures from entering the furnace. In this case there are: Device for lack of gas, Device for lack of air supply, Electrical fault device, Backfire protection device, Overheating protection device, Anti-flame device. Therefore, any failure in the gas supply or heating must generate a visible or audible warning. In the event of a gas supply interruption, an inert gas or single gas must be introduced into the oven immediately and if possible automatically. During the heat treatment carried out, it is necessary to periodically purge the atmosphere of the furnace which involves loss of protective atmosphere. However, vacuum heat treatments do not require purging.
- The cooling section uses intensive circulation of cooling gas such as liquid nitrogen, which can reduce the temperature from 1.230°C to 60°C in less than 20 minutes. Alternatively, the use of cooling tanks in oil and water is envisaged.
- In the exit section the materials, after passing through the various parts of the Inertization system, will be subjected to a short stationing. Anthropomorphic robots will handle quality control. The quantitative and qualitative characteristics of the flow of materials are reported to the monitors of the control center where an operator will initiate the robots to use instruments with analysis techniques for the detection of the composition and characterization of the materials. Specifically, use will be made of a near infrared spectrometer based on the exclusive patented NIR MEMS technology. A robot will guide, through simple contact, the sample under examination to the analytical result which can be rendered in less than 10 seconds. The Olympus BTX II closed beam RX diffractometer will be positioned from another location. This latter is the technology used by the US NASA in the Rover on Mars, for mineralogical analyzes. The instrumentation is equipped with a software capable of identifying and quantifying the presence of various minerals in a few minutes following a simple sequence of 5 actions from sampling to the final result. Each result is transferred and saved on the PC. The Protective Atmosphere Inertization Plant is equipped with a process control, measurement and management system and is able to monitor the related parameters in real time. The control of the process related to the alarm systems, allows to monitor the plants in remote desktop mode. The benefit of this technology is the operation of the plants 24 hours a day, 7 days a week, 365 days a year. Furthermore, the high level of computerization adopted makes it possible to monitor every phase of the entire process.

Here are some auxiliary systems belonging to the instrumentation of the industrial apparatus:
- Post-combustor system for gas exhaust and thermal oxidation emission control, the temperature of which can reach up to 1.200°C;
- Process flow monitoring system to detect failed gas flow through the process zones, which allows the operator to quickly adjust the minimum flow required before the process itself can be compromised;
- LPS Protection System forming part of the cooling section and the material inlet and outlet section ;
- Treatment pressure control system;
- Maximum height adjustment system of the conveyor belt;
- Air purification, drying and filtration system;
- Over temperature shutdown system and to monitor each zone and respond to excessive temperature conditions ;
- Oxygen analyzer system and 4-way inline gas sampling system integrated with the control system. Using the oven's HMI, the user can select a door to allow the Oxygen analyzer to monitor levels through the doors inserted into the heating section. Levels out of tolerance are displayed with a visual warning and audible alarm on the oven's HMI screen and will alert the log to the hard disk event file so that the situation can be resolved;
- Generator set to keep the conveyor belt, fans and control system operational during a power failure;
- Three-stage alarm status light tower: red, warning / alarm condition - yellow, process not ready, no alarm - green, process ready, no alarm;
- 32-bit PLC industrial controller system using a rack mount industrial PC for the user interface;
- Security password to allow different levels of access and control rights. For communication, the system uses an Ethernet connection between the PC and various controllers. All inputs and outputs are optically isolated to ensure stable and noise-free data transfers. All operating software, recipes and profiles are stored on the hard disk. A removable hard drive is also available for backup;
- Remote control system via modem and internet.

Some tests performed are listed below.

The process has been tested both in Amphibole and Serpentine minerals and in Eternit slabs. The main activity was to analyze the thermal behavior with the aim of obtaining as much information as possible and of reaction on the various types of asbestos, even for the less common ones. More in-depth tests have been conducted on Chrysotile also contained in other meandering rocks such as Lizardite and Lantigorite. The thermal analysis used in the process was very helpful and the different use of the instruments was mainly aimed at determining the quantity and quality of the Chrysotile contained within the peridotite rocks and in the asbestos-cement. The heating of the minerals containing Chrysotile in different concentrations produced equally different results for what concerns the weight loss. It was possible to verify that, with the process, the serpentine minerals with the greatest quantity of Chrysotile undergo a greater weight loss than those whose concentration was lower. This result shows us that the structure of the Chrysotile favors the absorption of water, a datum found also for the Amphiboles but, with a lower value. Chrysotile weight loss occurs already at the temperature of 500°C, while at the temperature around 800°C it shows us a strong exothermic signal during which the mineral develops heat by chemical reaction. Dehydration and the loss of hydrogen and oxygen atoms in chrysotile fibers occur at temperatures ranging from 550 to 650°C and this figure was lower than other serpentine minerals such as Lizardite or Antagorite whose process takes place around 800°C. For the Asbestos belonging to the Amphibole Group, the process required higher temperatures than the Serpentine, i.e., from 800 to 900°C. In the case of asbestos-cement materials the presence of Chrysotile is sometimes associated with Crocidolite even if the quantities of amphibole are always in percentages much lower than those of Chrysotile which, however, remains indisputably the most widespread of all the asbestos contained in the materials distributed on the market and mainly in construction. Even before the results under the microscope, the loss of specific weight is highlighted and the implant will be programmed so that all the serpentinites contained in the mineral can register an exothermic peak, signaling the start of a metamorphosis with which recrystallization creates the new amorphous material. In the Serpentinites the different curved, flat and modulated structures determine peaks of different temperatures which we summarize in: 650°C for the Chrysotile; up to 750°C for Lizardite; up to 800°C for Antigorite. However, it was found that at 850°C the dehydration of the structural water contained within the fibers with the effect of weight loss, reached completion. In the case of amphibole asbestos, the temperature at which dehydroxylation occurs largely depends on the type of cation that occupies the M3 and M1 sites in the crystal structure, because in the amphibole structure the hydroxyl group OH is bound to the cations that occupy these sites. The dehydroxylation temperature increases with the increase of Mg2+ contained in the sites. For Asbestos belonging to the Amphibole Group, the effects of the process give rise to Olivine, Pyroxene, Hematite, sometimes Cristobalite and other amorphous material. The chemical reactions related to the dehydroxylation and recrystallization processes are influenced by the reaction rate; the main factors are as follows: a) the use of the type of atmosphere selected, b) the temperature curve, c) the use of catalysts. The result is represented by the output material at the end of the process. The crystallization of Forsterite is accompanied by the production of an amorphous region rich in Silicon, while it was not possible to detect the presence of amorphous regions rich in Magnesium, Forsterite and Enstatite which can be easily distinguished in low magnification TEM images. This is because Forsterite has a homogeneous contrast, while Enstatite is systematically characterized by an evident lamellar tissue. The treatment of materials containing Cement and Asbestos also characterize the presence of Dicalcium Silicate such as Larnite and Belite. TEM observations suggest that all serpentine samples undergo metamorphosis and decompose, albeit at varying temperatures, producing an amorphous intermediate phase rich in Silicon and concomitant crystallization of Forsterite. For Chrysotile, the trend is similar to other serpentine minerals. The first reaction is the decomposition of the serpentine phase followed by the formation of Forsterite above 650°C and subsequently the crystallization of Ensatite, as a high temperature reaction path. Thermal analyzes have shown that Chrysotile is totally decomposed at 750°C and is the least stable serpentine mineral. Among other serpentinite minerals, Lizardite has been detected up to 750°C, while Antigorite has been detected up to 800°C. The Chrysotile reaction involves the breaking of Mg-O-Si and Si-O-Si bridges with Magnesium migration to form Magnesium-rich regions and Silicon counter-migration to produce Silicon-rich regions. At higher temperatures, Forsterite still crystallizes in the Magnesium-rich regions, while the Ensatite begins to form in the Silicon-rich regions. The formation of Forsterite stops when all available Magnesium atoms are consumed. At 1.000°C, Forsterite is about 80% by weight and is accompanied by Ensatite and other amorphous material. The data collected with the analyzes after the treatment show that Chrysotile becomes amorphous in the phase in which the hydroxyl ions, which occupy 75% of the octahedral Magnesium, are eliminated and replaced by the crystalline structure. During the process, the protons migrate to a reaction zone where the water molecules are condensed and released. The Magnesium and Silicon ions contrast each other, maintaining the Mg-Si ratio 3: 2, while the Oxygen structure later hosts all the Magnesium and Silicon ions. With the exothermic peak at 800°C, the collapse of oxygen levels occurs and the growth of the percentage of Forsterite is simultaneous. The thermal decomposition of Amphibole Asbestos, for example Crocidolite, also takes place in three phases: physically combined water loss, combined water chemical loss and final decomposition into simpler phases. The typical DTA curves for the Crocidolite samples also showed a first thermal exothermic effect at 400°C, associated with oxidation, no effect at 700°C; an acute endothermic peak with weight loss at 900°C with conversion of Fe2 to Fe3 and a small exothermic peak at 950°C from which crystallization is assumed to have started. After the heat treatment, the analyzes characterized Olivine, Pyroxenes, Egirina, Ferrosilite, Magnetite, Hematite and sometimes Cristobalite. Tests performed on Amosite and Tremolite produced a pattern very similar to that just described for Crocidolite. The final products from the decomposition of Ammosite whose exothermic peak was detected at 900°C were: Spinel, Hematite, Magnetite and Cristobalite. The thermal analysis on Tremolite mainly shows an endothermic peak at 950°C while the exothermic peak, a sign of the crystallization phase, occurs after reaching the temperature of 1.100°C. In this case, Diopside, Enstatite and Cristobalite were analyzed. To sum up:
Crocidolite -> Acmito - Ferrosilite - Magnetite - Hematite - Cristobalite - Olivine (NaFeSi2O6) (FeSiO3) (Fe3O4) (Fe2O3) (SiO2) (MgFe)2SiO4
   (Endothermic Peak from 800 to 950°C - dehydration / Exothermic Peak at 1.000°C)
Amosite -> Spinel / Pyroxene - Hematite - Magnetite - Cristobalite (Endothermic Peak from 800 to 900°C - dehydration / Exothermic Peak at 950°C)
Tremolite -> Diopside - Enstatite - Cristobalite - Olivine - Pyroxene (Endothermic peak at 950°C - dehydration - Exothermic peak at 1.100 °C)

Crocidolite loses water in the temperature range between 400 to 500°C. At 600 up to 950°C, Oxycrocidolite is endothermic decomposable and most of the Fe²⁺ is oxidized to give Acmite, Hematite, Cristobalite, and a Spinel. At 975 up to 1.000°C, Acmite decomposes and melts begin. Around 400 and 650 up to 700°C, very weak endothermic effects are observed, a strong endothermic effect is marked even at about 800°C, while a significant endothermic peak occurs at 900 up to 920°C. As a result of the heat treatment up to 1.000°C, under X-rays, the material obtained from Crocidolite Asbestos fibers shows a great amorphous nature. The mass loss associated with the process should be around 2.0% by mass. The temperature at which the process occurs in the amphiboles largely depends on the type of cation that occupies the *M*₃ and *M*₁ sites in the crystal structure, because in the amphibole structure the hydroxyl group is bound to the cations that occupy these sites. The results of the isothermal calcifications of the Crocidolite Asbestos samples confirm the fact that the Crocidolite Asbestos undergoes thermal decomposition at a temperature below 700°C and the characteristic bluish color of the crocidolite fibers turns to rusty red with increasing temperature. The use of protective atmospheres has therefore demonstrated the formation of new amorphous materials which are summarized in: Forsterite, Enstatite, Hematite, Ferrosilite, Diopside, Magnetite, Erigina, Acmite, Spinel. If the treatment processes materials containing cement-asbestos, for example asbestos slabs, the use of protective atmospheres generates a compound represented mainly by Larnite and minimally by Forsterite.

The European Directive 2008/98 / EC introduced the End-of-Waste but, the country of Italy, only with Law No. 128 of November 2, 2019, tried to give a more convincing and "sensible" answer to the dramatic situation that had been created for what concerned one of the cornerstones of the "circular economy", that is the recovery of waste. Despite this, nothing new; substantially, it is recalled that with reference to the simplified recovery procedures, the rules laid down by Ministerial Decree 5 February 1998 and by Ministerial Decree 161/2002 continue to be applied.

In the face of regulations that do not declare definitive clarity, there is also the total absence of industrial technologies capable of giving answers to the Asbestos problem. Nevertheless, the opportunities for recycling of Larnite and Forsterite deriving from the treatment of Cement and Asbestos are identified. In the patent n° 128889/2017 the undersigned Inventor had already described and claimed the applications in the ceramic sector. New industrial applications are indicated below. Given the typical characteristic of withstanding high temperatures, refractory bricks have been produced following the industrial procedures known in the sector. In fact, the most common type of refractory bricks is made starting from a mixture of refractory clay, i.e., Aluminum Oxide in a percentage between 50% and 80% and Silicon Oxide in a percentage between 50% and 20%, to which small percentages of other metal oxides can be added. By appropriately varying the percentages and chemical species of the base mixture, many types of refractory bricks will be obtained. A mixture with high percentages of silicon oxide will give rise to bricks that not only withstand high temperatures but also have a low coefficient of thermal expansion and therefore resist, without disintegrating, thermal shocks. Bricks with high percentages of aluminum oxide resist well to high temperatures but not to thermal shocks. From a classification of the materials on the market we have: Clay refractory bricks, Chromite refractory bricks, Bauxite refractory bricks, Silica refractory bricks, Silico-Aluminous refractory bricks, Magnesite refractory bricks, etc., each of which with characteristics and different destinations. With the achievement of the inertization result we are aware of being able to achieve the further goal by being able to integrate the components necessary for the realization of a high-quality refractory. The laying of the bricks is carried out with the use of mortars, usually consisting of the same basic mixtures of refractory products, shaped and cooked at temperatures normally between 1.250 and 1.650°C. The higher the temperature used, the better the sintering process therefore, the better quality. Larnite and Forsterite, produced by the Inertization Process of asbestos slabs, flues, drinking water pipes and asbestos-cement tanks, were used for the composition of refractory bricks based on calcium and magnesium silicates. Larnite, calcium nesosilicate, Ca₂ SiO₄, is represented in the highest percentage, from 85 to 90%, It has a melting temperature around 2.130°C. It is a rare and little-known compound but it can also be artificially formed, especially during the synthesis of refractory and ceramic materials. It is also known as Dicalcium Silicate and is one of the main constituents of Portland Clinker. It is present in the chemistry of cement with the name of Belite. Forsterite, Magnesium nesosilicate, Mg₂SiO₄, has a melting temperature of around 1.910°C. In Italy they have been found in the geodes of the volcanic fragments of Mount Somma on Vesuvius, while in the rest of Europe only in Norway. Forsterite is also classified as a mineral of meteoritic origin. Other inert materials, characterized by the analyzes, represent the percentage between 1 and 4%. Using Larnite and Forsterite, we have made refractory bricks of the size of cm. 22 x 8 h 4 which, compressed in metal molds, were sintered at a temperature of 1.180°C, i.e., at a temperature below the minimum normally set in the industrial process. We proceeded in the following way. After inerting a slab of cement and asbestos, the compound of Larnite and Forsterite was crushed by means of a rotary crusher. Instead, a ball mill was used to reduce the particle size on a millimeter basis. For the dough, every 500 gr. of Larnite-Forsterite powder, 10 grams of dark chocolate, 50 gr. of Chamotte, 60 gr. of Bentonite and 50 gr. of water. After having mixed everything well, the compound was pressed into molds and sintered following the procedures used in the industry. Concluded the cycle of preparation, the bricks were mounted inside a rotary kiln at a cement factory at an operating temperature of 1.450°C from where they were removed after 6 months. The bricks were intact, no evident deformation, nor dimensional variations. The materials have been shown to have resistance to cyclic stresses in different points of the product which would have led to the onset of stresses which could have triggered breakages. The main advantage was that, even having set the sintering temperature to a value much lower than the minimum normally used in industry, the material proved to be of excellent quality, without compromising its technical characteristics and from which we must also draw considerations. economic and energy saving. From this it is believed that the applications of such refractories could be widespread in the cement industry, more precisely, as components in Vertical Kilns and Rotary Kilns; in foundries as components of the furnace basin, in cubicles, in siphons, on casting channels, in cooking furnaces, in induction furnaces, in holding furnaces as coatings; in the Steel and Heating Industry, as components of vaulted cladding, walls and sole of: Blast Furnaces, Pit Furnaces, Tundish Furnaces , Longheroni, Push, Burner Bridge, Rotating Furnaces, Forge Furnaces; in the Ceramic and Sanitary Industry, as components of the Coatings of Tunnel Ovens, of trolleys for cooking products; in the Glass Industry, as components of the channels of the Glass Furnace, in the Channel superstructure and in the Channel Tank; in the Brick Industry, as components of the Wagon, the Tunnel Kiln, the Vault, the Top and Walls, the Cooking Trolley; in the Energy Production Industry, in the Petrochemical Industry and in Incinerators, as components of the Waste Incineration Furnace, in the walls etc., of the Waste Drying Furnace, of the Thermodestructors, in the Burner throat lining, in the Furnaces of the Petrochemical Industry, etc. moreover, it is possible to foresee a reserved use as an additive directly on the rotary kiln in cement factories. In fact, in this section of the plant, at the temperature of 1.450°C, the Clinker is produced from which Larnite is formed in a variable percentage from 15 to 25%; The addition of further materials such as fly ash, gypsum, pozzolan, limestone, give rise to the cement. The higher the calcium correction, the better the quality of the cement; consequently, the Larnite and Forsterite compound integrates, as Dicalcium Silicate, any calcium content that may be deficient, to obtain a high-quality cement. On the destination of the treatment of Serpentine Asbestos and Amphibole Asbestos minerals from which we obtain Forsterite, Hematite etc. industrial applications open up very interesting scenarios, especially as elements to be included in Powder Metallurgy. In fact, powder metallurgy is the process of producing metal powders whose use is aimed at making shaped parts, semi-finished and finished products. The manufacturing process consists of pressing selected powders or powder mixtures to the desired shape and then heating the compact usually to a temperature below the melting point of the material. In this case the Forsterite powder, Magnesium silicate, is preliminarily mixed and poured into a hardened steel or hard metal mold of suitable shape and size and then pressed to a density corresponding to 70-90% of that of the selected solid metal. The strength of pressed semi-finished products is still low. The purpose of sintering is to improve mechanical properties, i.e. to increase strength and density. Sintering is performed at a temperature below the melting point of the main component of the product. During sintering, the size of the work is reduced and its density increases. Heating and cooling must be carried out in a protective gas and for times between 0.5 and 1.5 hours. In conventional metallurgical processes the metal starts in the molten state and is then solidified, while in powder metallurgy the desired shape is achieved without melting. The basic raw material of the metallurgical products of the powders will however remain the metal powder. It will be possible to produce a number of alloys from high melting point metals and alloys that would not mix with each other in the liquid state or form solid solutions or intermetallic compounds. Powder metallurgy is the only economical method to produce high purity refractory metals such as, for example, Molybdenum, Tugsten, Niobium, Tantalum; furthermore, material of higher purity than that produced by casting and casting can be obtained. In this case, with the Inertization Process, a new era of Metal-Ceramic or Powder Ceramics would start where Forsterite and partly inert materials, mixed with metal powder, could give life to new alloys whose characteristics could be decidedly better than those currently known. Here are some examples of products specifying that the quantity of Forsterite powder must be between 5 and 45% of the new compound: dynamo and motor brushes, cores for electric inductors, magnets, hard metal tools, pads of the brakes for aircraft and means of transport in general, self-lubricating bearing materials, porous metal filters, etc.; for the production of friction components such as discs, segments, sheets, pads and blocks, etc.; for the production of small mass-produced parts such as low-stress gears, washers, gaskets, cams, cam discs, rollers, bushings, screws, etc.; application for the production of metallurgical products of porous powders, such as filters for fuels and lubricants, as well as for the removal of dust from gases, etc., or filters made with powders of corrosion-resistant materials. The potential in the War Industry with applications in military technologies and on National Defense systems is also important, for example for the production of heavy alloys used for the storage of radioactive substances, for the production of synthetic fibers with high mechanical resistance, etc.; in Electrical and Electronic Engineering already closely connected to powder metallurgy. A further application is the production of ceramic tool tips and wear-resistant parts already in use in powder metallurgy. A great advantage of ceramic tips is that they retain their hardness which is equal to that of the hardest metals, even at high temperatures. The hard metal and Forsterite powders are pressed into the tips and then sintered to the final size in vacuum or hydrogen atmospheres. A vacuum under pressure is used and sintering is carried out at a temperature between 1.450 and 1.500°C. The sintering of Forsterite with hard metals would develop new cutting tools, but also tools for metal working, such as: dies for drawing tubes and wires, blanking, deep drawing, male dies, etc. wire guides, turning centers and other parts subject to wear and corrosion; for heat resistant components in chemical engineering plants, such as valves and valve seats, etc.; for applications in missile, nuclear, aerospace engineering, such as for protective shields, heat shields, housing shields etc.; production of metamaterials and for biomedical applications of biomaterials, such as replacing titanium prostheses whose studies are already being revealed to the scientific community, or even in nanotechnologies. Finally, we can also provide for application in the artisan field of goldsmithing and processing of precious stones. In fact, in the Natural History Museum in Washington, Forsterite gems from various parts of the world are exhibited in armored cases. Jewels probably belonged to rulers and princes, however to wealthy people who wrote history and from whom it was possible to pass on their wealth to the present day. With the splendid handicraft works, cared for in carving and processing, set in precious necklaces, rings and bracelets, also the Forsterite minerals of several dozen carats. Precious stones of extraordinary beauty able, having very heterogeneous optical properties, to re-emit light through their brilliance.

To conclude, the computerization and digitalization connected to the technological aspect of the inerting system 4.0 will serve to identify, with the characteristics of the Secondary Raw Material, its best destination among those identified and those that can be added further. The objectives that we propose of environmental and economic sustainability are perfectly linked to the result of the Circular Economy that we must remember, stands on three fundamental principles: 1° Planning the elimination of waste and pollution; 2° Keep Products and Materials in use; 3° Regenerate natural systems.

## Claims

1. Inertisation process of Asbestos /Cement and/or Serpentine Asbestos and/or Amphibole Asbestos materials, including the following phases:
- receive sealed containers in a defined area;
- proceed with shuttle systems to transfer watertight containers to the passive ventilation stationary area;
- open the sealed containers with anthropomorphic robots;
- transfer materials made of asbestos cement and/or serpentine asbestos and/or amphibole asbestos onto the conveyor belt;
- aspirate and wash the sealed containers in the tanks of the reclamation section and allocate with shuttle systems the distribution for the new cycle of collection and delivery of materials;
- activate the temperature in the drying furnace in Section 1 up to 80 ºC and in Section 2, up to 200 ºC;
- set the belt speed for a duration of 1 to 2 hours;
- start the conveyor belt on the Drying Furnace;
- set and increase the temperature on the furnace in a Protective Atmosphere and/or, Synthetic Protective Atmosphere and/or, Controlled Atmosphere and/or, Prepared Thermal Atmosphere up to 850 ºC and introduce the gas mixture into the generator retort;
- transfer the materials dried on the pushed conveyor onto the trays inside the inertising furnace;
- increase the temperature to 1,230 ºC;
- set the belt speed at 20 to 60 minutes;
- start the pushed conveyor at intermittent speed;
- operate the liquid nitrogen intensive cooling system;
- open the cooling section and move the trays;
- close the cooling section and set the stationary time at 10 to 20 minutes;
- operate the conveyor up to the exit of the trays for the analysis and characterisation of the material;
- activate the anthropomorphic robots to start the difractometric and x-ray fluorescence analysis;
- transmit the comparison of the spectra in memory detected on the selected material to the device, perform the difractometric characterization;
- determine the composition and the minerals chemical structure of Larnite, Belite, Forsterite, Olivine, Enstatite, Egirina, Ferrosilite, Magnetite, Hematite;
- update the database;
- translate the Inerted Materials on the push conveyor inside the Depression Chamber up to the loading compartment of the hoppers;
- seal the Depression Chamber;
- start the dedusting, suction and air filtration systems;
- crush the minerals of Larnite, Belite, Forsterite, Olivine, Enstatite, Egirina, Ferrosilite, Magnetite, Hematite with machinery in the mechanical industry used;
- activate the conveyor belt and translate the crushed material into the comminution section;
- start the grinding of the minerals of Larnite, Belite, Forsterite, Enstatite, Egirina, Ferrosilite, Magnetite, Hematite with machinery used in the mechanical industry and obtain a particle size in micrometric format;
- move the ground material into watertight containers operated by anthropomorphic robots on screw conveyors;
- deactivate the dedusting, suction and air filtration systems;
- unlock the exit section and operate the shuttle systems for the transfer of watertight containers to the storage area of the plant;
- activate the perimeter control systems, high-resolution visual day and night and alarm with remote access.

2. Process according to any one of the previous claims, in which the type of Inertisation Furnace is of the discontinuous type, for example batch furnaces, well furnaces, bell furnaces, muffle furnaces, vacuum furnaces, or continuous such as tunnel furnaces, thrust furnaces, roller furnaces and tower furnaces.

3. Process according to any one of the previous claims, in which the choice of atmosphere to be used in the Inertisation Furnace is represented by Endothermic Gas, Rich Gas, Exothermic Lean Gas, based on Nitrogen made from Rich Exothermic Gas removing CO2 and H2O, with almost pure Nitrogen made from Exothermic Lean Gas with dissociated Ammonia, or by mixing Nitrogen with Hydrogen, Methanol, Methane and Propane.

4. Process according to any one of the previous claims, in which Asbestos Cement and/or Serpentine Asbestos and/or Amphibole Asbestos Materials are cooled with a liquid nitrogen circulation system.

5. Process according to any one of the previous claims, in which the activities of collection, handling and flow of materials, control and characterization of Asbestos Cement Materials and/or Serpentine Asbestos and/or Amphibole Asbestos, are carried out with automated techniques coordinated by a central information system, performed by industrial robots, stacker cranes, shuttle systems with or without sliding on guide rails, anthropomorphic arms, input and output buffers, automatic or semiautomatic devices connected in series or parallel.

6. Process according claim 1 wherein the raw materials are Forsterite and / or Olivine and / or Larnite and / or Belite and / or Enstatite and / or Egirina and / or Ferrosilite and / or Magnetite and / or Hematite, for the preparation of powder mixtures in an amount ranging from 20 up to 60% with Clay, Aluminum Oxide, Silicon Oxides, Magnesium Oxide, Iron Oxides, Calcium Oxides, Chromite, Kaolin, Magnesium Carbonate, Iron Carbonate, Calcined Magnesia, Bauxite, Chamotte, Bentonite and Fluxes in various combinations , comprising the further step of producing refractory bricks.

7. Process according claim 1 wherein the raw materials are Forsterite and / or Olivine and / or Larnite and / or Belite and / or Enstatite and / or Egirina and / or Ferrosilite and / or Magnetite and / or Hematite, for the preparation of powder mixtures in an amount ranging from 5 up to 40% with powders based on Iron, Carbon, Copper, Graphite, Magnesium, Bronze, Brass, Tin, Zinc, Tungsten, Molybdenum, Titanium, Zircon and / or with Stainless Steel Grits, and / or with Elastomeric Materials, Terpolymers, Resins, Polyvinyl Chlorides in various combinations, comprising the further step of producing metal alloys, high-alloyed superalloys, metal-ceramic composites, refractory metals, thermoplastics, with processes already known in the Powder Metallurgy Industry, Metalceramics, Nanotechnologies, Biotechnologies, in the Rail, Air and Road Transport, Electric and Electronic Engineering, Rocket, Nuclear, Aerospace, Biomedical Engineering, in the War Industry, Equipment and Defense Systems.

8. Process according claim 1 wherein the raw materials are Forsterite and 1 or Olivine and / or Larnite and / or Belite and / or Enstatite, comprising the further step of producing Jewelery and Precious Objects in the Goldsmith Industry.

9. Apparatus for inertising Asbestos /Cement and/or Serpentine Asbestos and/or Amphibole Asbestos material according to Claim 1, **characterized by** a Watertight Containers, made of sustainable and recyclable composite material, composed of and with metal alloys, or, high-alloy superalloys, or, galvanized sheet metal, or, high-performance polymers, or, heat-resistant plastic material, with smooth walls and with double oleodynamic opening both on the upper party and lateral sides, identified with its own pre-printed serial number, equipped with stationary feet, hooks for lifting and handling, with a digital GPS localization and tracking system and of the following dimensions: width from 1 to 2 meters, length from 1 to 4 meters, height from 1 to 2 meters, inside which are arranged Trays for the containment of compact material, made of metallic alloys and/or high-alloy superalloys, sustainable and recyclable, equipped with anchoring supports, spacers, double-joint hooks for automatic handling, or, for the containment of friable material, made of high-melting-point metallic alloy, sustainable and recyclable, equipped with anchoring supports, spacers, hooks for automatic handling, protective edges, and with the following dimensions: width from 0.5 up to 1.5 meters, length from 1 up to 4 meters, height from 3 up to 10 centimeters; and including the following elements:
- a defined receiving area for sealed containers,
- a shuttle system for transferring watertight containers to the passive ventilation stationary area,
- anthropomorphic robots for opening the sealed containers,
- transferring means for transferring said materials onto a conveyor belt proceeding on a Drying Furnace,
- aspirating and washing means for the sealed containers in the tanks of the reclamation section,
- a shuttle allocating system for the distribution during a cycle of collection and delivery of materials,
- means for unlocking the exit section and operating the shuttle system for the transfer of watertight containers to the storage area of the plant,
- a database which is updated and with essential features for:
- a cooling system
- a depression chamber provided with sealing means.
- dedusting, suction and air filtration systems
- crushing means
- grinding means
- screw conveyors.

## Patentansprüche

1. Verfahren zur Inertisierung von Asbest-/Zementmaterial und/oder Serpentin-Asbest und/oder Amphibol-Asbest, umfassend die folgenden Schritte:
- Empfangen von hermetisch verschlossenen Behältern in einem definierten Bereich;
- Überführen der wasserdichten Behälter mittels Shuttlesystemen in einen stationären Bereich mit passiver Belüftung;
- Öffnen der verschlossenen Behälter durch anthropomorphe Roboter;
- Überführen der aus Asbestzement und/oder Serpentin-Asbest und/oder Amphibol-Asbest bestehenden Materialien auf ein Förderband;
- Absaugen und Waschen der verschlossenen Behälter in den Becken des Sanierungsabschnitts sowie deren Zuordnung durch Shuttlesysteme für einen neuen Sammel- und Lieferzyklus;
- Aktivieren des Trocknungsofens, wobei in Abschnitt 1 eine Temperatur von bis zu 80 °C und in Abschnitt 2 eine Temperatur von bis zu 200 °C eingestellt wird;
- Einstellen der Förderbandgeschwindigkeit auf eine Dauer von 1 bis 2 Stunden;
- Starten des Förderbands im Trocknungsofen;
- Einstellen und Anheben der Temperatur im Ofen in einer Schutzatmosphäre und/oder synthetischen Schutzatmosphäre und/oder kontrollierten Atmosphäre und/oder vorbereiteten thermischen Atmosphäre auf bis zu 850 °C sowie Einführen eines Gasgemischs in die Generatorretorte;
- Überführen der getrockneten Materialien vom Schubförderer auf Tabletts im Inertisierungsofen;
- Erhöhen der Temperatur auf 1.230 °C;
- Einstellen der Förderbandgeschwindigkeit auf 20 bis 60 Minuten;
- Starten des Schubförderers im intermittierenden Betrieb;
- Aktivieren eines intensiven Flüssigstickstoff-Kühlsystems;
- Öffnen des Kühlabschnitts und Bewegen der Tabletts;
- Schließen des Kühlabschnitts und Einstellen einer Verweilzeit von 10 bis 20 Minuten;
- Betreiben des Förderbands bis zum Austritt der Tabletts zur Analyse und Charakterisierung des Materials;
- Aktivieren der anthropomorphen Roboter zur Durchführung diffraktometrischer Analysen und Röntgenfluoreszenzanalysen;
- Übermitteln der gespeicherten Spektren-Vergleiche des ausgewählten Materials an das Gerät sowie Durchführen der diffraktometrischen Charakterisierung;
- Bestimmen der Zusammensetzung und der mineralogischen Struktur von Larnit, Belit, Forsterit, Olivin, Enstatit, Ägirin, Ferrosilit, Magnetit und Hämatit;
- Aktualisieren der Datenbank;
- Überführen der inertisierten Materialien auf dem Schubförderer in die Unterdruckkammer bis zum Einfüllbereich der Trichter;
- Abdichten der Unterdruckkammer;
- Aktivieren der Entstaubungs-, Absaug- und Luftfiltersysteme;
- Zerkleinern der Minerale Larnit, Belit, Forsterit, Olivin, Enstatit, Ägirin, Ferrosilit, Magnetit und Hämatit mittels in der mechanischen Industrie verwendeter Maschinen;
- Aktivieren des Förderbands und Überführen des zerkleinerten Materials in den Zerkleinerungsabschnitt;
- Starten des Mahlvorgangs der genannten Minerale mittels in der mechanischen Industrie verwendeter Maschinen, um eine mikrometrische Partikelgröße zu erhalten;
- Überführen des gemahlenen Materials in wasserdichte Behälter, die über Schneckenförderer durch anthropomorphe Roboter bewegt werden;
- Deaktivieren der Entstaubungs-, Absaug- und Luftfiltersysteme;
- Freigeben des Ausgangsabschnitts und Betreiben der Shuttlesysteme zum Transfer der wasserdichten Behälter in den Lagerbereich der Anlage;
- Aktivieren der perimeterseitigen Überwachungssysteme, hochauflösender visueller Tag- und Nachtüberwachung sowie der Alarmanlage mit Fernzugriff.

2. Verfahren nach einem der vorhergehenden Ansprüche, wobei der Inertisierungsofen ein diskontinuierlicher Ofen ist, beispielsweise ein Chargenofen, Senkofen, Haubenofen, Muffelofen oder Vakuumofen, oder ein kontinuierlicher Ofen, beispielsweise Tunnelöfen, Schuböfen, Rollenöfen und Turmöfen.

3. Verfahren nach einem der vorhergehenden Ansprüche, wobei die Auswahl der im Inertisierungsofen zu verwendenden Atmosphäre aus endothermischem Gas, fettem Gas, magerem exothermischem Gas, stickstoffbasiertem Gas, das aus fettem exothermischem Gas durch Entfernung von CO₂ und H₂O hergestellt wird, nahezu reinem Stickstoff, der aus magerem exothermischem Gas hergestellt wird, aus dissoziiertem Ammoniak oder durch Mischung von Stickstoff mit Wasserstoff, Methanol, Methan und Propan getroffen wird.

4. Verfahren nach einem der vorhergehenden Ansprüche, wobei die Asbestzementmaterialien und/oder Serpentin-Asbest und/oder Amphibol-Asbest mittels eines Flüssigstickstoff-Umlaufsystems gekühlt werden.

5. Verfahren nach einem der vorhergehenden Ansprüche, wobei die Tätigkeiten des Entnehmens, Bewegens und Materialflusses sowie die Kontrolle und Charakterisierung der Asbestzementmaterialien und/oder Serpentin-Asbest und/oder Amphibol-Asbest mittels automatisierter Techniken ausgeführt werden, die von einer zentralen Informationseinrichtung koordiniert und von Industrierobotern, Regalbediengeräten und Shuttlesystemen mit oder ohne Führungsschienen, anthropomorphen Armen, Input- und Output-Puffern, automatischen oder halbautomatischen Apparaten ausgeführt werden, welche in Reihe oder parallel miteinander verbunden sind.

6. Verwendung des gemäß dem Verfahren nach Anspruch 1 inertisierten Materials als Rohstoff, **gekennzeichnet durch** Forsterit und/oder Olivin und/oder Larnit und/oder Belit und/oder Enstatit und/oder Ägirin und/oder Ferrosilit und/oder Magnetit und/oder Hämatit, zur Herstellung von Pulvermischungen in einer Menge zwischen 20 und 60 % mit Ton, Aluminiumoxid, Siliziumoxiden, Magnesiumoxid, Eisenoxiden, Calciumoxiden, Chromit, Kaolin, Magnesiumcarbonat, Eisencarbonat, gebrannter Magnesia, Bauxit, Schamotte, Bentonite und Flussmitteln in verschiedenen Kombinationen zur Produktion von feuerfesten Steinen.

7. Verwendung des gemäß dem Verfahren nach Anspruch 1 inertisierten Materials als Rohstoff, **gekennzeichnet durch** Forsterit und/oder Olivin und/oder Larnit und/oder Belit und/oder Enstatit und/oder Ägirin und/oder Ferrosilit und/oder Magnetit und/oder Hämatit, zur Herstellung von Pulvermischungen in einer Menge zwischen 5 und 40 % mit Eisen-, Kohlenstoff-, Kupfer-, Graphit-, Magnesium-, Bronze-, Messing-, Zinn-, Zink-, Wolfram-, Molybdän-, Titan-, Zirkon-Pulvern und/oder mit Edelstahlgranulat und/oder mit elastomeren Materialien, Terpolymeren, Harzen, Polyvinylchloriden in verschiedenen Kombinationen zur Herstellung von Metalllegierungen, hochlegierten Superlegierungen, metallkeramischen Verbundwerkstoffen, refraktären Metallen, Thermoplasten in der Pulvermetallurgie, Metallkeramik, Nanotechnologie, Biotechnologie, im Schienen-, Luft- und Straßenverkehr, in der Elektro- und Elektroniktechnik, der Raketen-, Nuklear-, Luft- und Raumfahrttechnik, der Medizintechnik, der Rüstungsindustrie sowie für Ausrüstungen und Systeme für die Verteidigung.

8. Verwendung des gemäß dem Verfahren nach Anspruch 1 inertisierten Materials, **gekennzeichnet durch** Forsterit und/oder Enstatit, zur Herstellung von Schmuck und wertvollen Objekten in der Schmuckindustrie.

9. Vorrichtung zur Inertisierung von Asbest/Zement und/oder Serpentin-Asbest und/oder Amphibol-Asbest gemäß Anspruch 1, **dadurch gekennzeichnet, dass** sie aus wasserdichten Behältern besteht, die aus einem nachhaltigen und recycelbaren Verbundmaterial hergestellt sind, bestehend aus und mit Metalllegierungen oder hochlegierten Superlegierungen oder verzinktem Blech oder Hochleistungspolymeren oder hitzebeständigem Kunststoffmaterial, mit glatten Wänden und mit einer doppelten oleodynamischen Öffnung sowohl an der Oberseite als auch an den Seiten, versehen mit einer eigenen vorgedruckten Seriennummer, ausgestattet mit festen Standfüßen, Hebe- und Handhabungsösen sowie einem digitalen GPS-Ortungs- und Verfolgungssystem, und die folgende Abmessungen aufweisen: Breite von 1 bis 2 Metern, Länge von 1 bis 4 Metern, Höhe von 1 bis 2 Metern; wobei im Inneren Schalen zur Aufnahme von kompaktem Material angeordnet sind, die aus Metalllegierungen und/oder hochlegierten Superlegierungen bestehen, nachhaltig und recycelbar sind, und mit Verankerungsstützen, Distanzhaltern, doppelgelenkigen Haken für die automatische Handhabung ausgestattet sind; oder Schalen zur Aufnahme von friablem Material, hergestellt aus einer Metalllegierung mit hohem Schmelzpunkt, nachhaltig und recycelbar, ausgestattet mit Verankerungsstützen, Distanzhaltern, Haken für die automatische Handhabung, Schutzkanten und folgenden Abmessungen: Breite von 0,5 bis 1,5 Metern, Länge von 1 bis 4 Metern, Höhe von 3 bis 10 Zentimetern;
und die folgende Elemente umfasst:
- einen definierten Aufnahmebereich für die versiegelten Behälter,
- ein Shuttlesystem zum Transport der druckdichten Behälter in den festen Bereich der passiven Lüftung,
- anthropomorphe Roboter zur Öffnung der versiegelten Behälter,
- Fördermittel zum Transport des Materials auf ein Förderband, das durch einen Trocknungsofen geführt wird,
- Absaug- und Waschmittel für die versiegelten Behälter in den Becken des Rückgewinnungsabschnitts,
- ein Shuttlezuteilungssystem zur Verteilung während eines Sammel- und Lieferzyklus der Materialien,
- Mittel zum Entriegeln des Ausgangsbereichs und zum Betätigen des Shuttlesystems für den Transport der druckdichten Behälter in den Lagerbereich der Anlage,
- Datenbank-Aktualisierungsmittel und die wesentlichen Einrichtungen für:
- ein Kühlsystem,
- eine Unterdruckkammer mit Dichtungseinrichtungen,
- Entstaubungs-, Absaug- und Luftfiltrationssysteme,
- Zerkleinerungsmittel,
- Mahlmittel,
- Schneckenförderer.

## Revendications

1. Procédé d'inertisation de matériaux d'amiante-ciment et/ou de serpentine amiantée et/ou d'amiante amphibole, comprenant les étapes suivantes :
- recevoir des conteneurs scellés dans une zone définie ;
- transférer, au moyen de systèmes de navettes, les conteneurs étanches vers une zone stationnaire de ventilation passive ;
- ouvrir les conteneurs scellés au moyen de robots anthropomorphes ;
- transférer les matériaux constitués d'amiante-ciment et/ou de serpentine amiantée et/ou d'amiante amphibole sur une bande transporteuse ;
- aspirer et laver les conteneurs scellés dans les cuves de la section de réhabilitation, puis les redistribuer au moyen de systèmes de navettes pour un nouveau cycle de collecte et de livraison des matériaux ;
- activer le four de séchage, en réglant la température de la Section 1 jusqu'à 80 °C et celle de la Section 2 jusqu'à 200 °C ;
- régler la vitesse de la bande pour une durée de 1 à 2 heures ;
- mettre en marche la bande transporteuse dans le four de séchage ;
- régler et augmenter la température du four dans une atmosphère protectrice et/ou atmosphère synthétique protectrice et/o u atmosphère contrôlée et/ou atmosphère thermique préparée jusqu'à 850 °C, et introduire le mélange gazeux dans la cornue du générateur ;
- transférer les matériaux séchés du convoyeur poussé vers des plateaux à l'intérieur du four d'inertisation ;
- augmenter la température jusqu'à 1 230 °C ;
- régler la vitesse de la bande pour une durée de 20 à 60 minutes ;
- mettre en marche le convoyeur poussé à vitesse intermittente ;
- activer le système de refroidissement intensif à l'azote liquide ;
- ouvrir la section de refroidissement et déplacer les plateaux ;
- fermer la section de refroidissement et régler un temps de séjour de 10 à 20 minutes ;
- actionner le convoyeur jusqu'à l'arrivée des plateaux à la zone d'analyse et de caractérisation du matériau ;
- activer les robots anthropomorphes pour effectuer l'analyse diffractométrique et l'analyse par fluorescence X ;
- transmettre à l'appareil la comparaison des spectres mémorisés détectés sur le matériau sélectionné, puis réaliser la caractérisation diffractométrique ;
- déterminer la composition et la structure chimico-minéralogique de la larnite, de la bélite, du forstérite, de l'olivine, de l'enstatite, de l'aegyrine, de la ferrosilite, de la magnétite et de l'hématite ;
- mettre à jour la base de données ;
- transférer les matériaux inertisés sur le convoyeur poussé à l'intérieur de la chambre de dépression jusqu'au compartiment de chargement des trémies ;
- sceller la chambre de dépression ;
- activer les systèmes de désempoussiérage, d'aspiration et de filtration d'air ;
- broyer les minéraux de larnite, bélite, forstérite, olivine, enstatite, aegyrine, ferrosilite, magnétite et hématite à l'aide de machines utilisées dans l'industrie mécanique ;
- activer la bande transporteuse et transférer le matériau broyé dans la section de comminution ;
- démarrer le broyage desdits minéraux à l'aide de machines utilisées dans l'industrie mécanique afin d'obtenir une granulométrie au format micrométrique ;
- transférer le matériau broyé dans des conteneurs étanches manipulés par des robots anthropomorphes sur des convoyeurs à vis ;
- désactiver les systèmes de désempoussiérage, d'aspiration et de filtration d'air ;
- déverrouiller la section de sortie et activer les systèmes de navettes pour transférer les conteneurs étanches vers la zone de stockage de l'installation ;
- activer les systèmes de contrôle périmétrique, la surveillance visuelle haute résolution jour/nuit et le système d'alarme avec accès à distance.

2. Procédé selon l'une quelconque des revendications précédentes, dans lequel le four d'inertisation est du type discontinu, par exemple un four à batch, un four à puits, un four à cloche, un four à moufle ou un four sous vide, ou bien du type continu, par exemple un four tunnel, un four à poussoir, un four à rouleaux ou un four à tour.

3. Procédé selon l'une quelconque des revendications précédentes, dans lequel l'atmosphère utilisée dans le four d'inertisation est constituée d'un gaz endothermique, d'un gaz enrichi, d'un gaz exothermique pauvre, d'un gaz à base d'azote préparé à partir d'un gaz exothermique riche en éliminant le CO₂ et le H₂O, d'un azote quasi pur préparé à partir d'un gaz exothermique pauvre, d'un gaz à base d'ammoniac dissocié, ou d'un mélange d'azote avec de l'hydrogène, du méthanol, du méthane et du propane.

4. Procédé selon l'une quelconque des revendications précédentes, dans lequel les matériaux en ciment-amiante et/ou en amiante serpentine et/ou en amiante amphibole sont refroidis au moyen d'un système de circulation d'azote liquide.

5. Procédé selon l'une quelconque des revendications précédentes, dans lequel les opérations de prélèvement, de manutention et de flux des matériaux, de contrôle et de caractérisation des matériaux en ciment-amiante et/ou en amiante serpentine et/ou en amiante amphibole sont exécutées au moyen de techniques automatisées coordonnées par un dispositif d'information central et réalisées par des robots industriels, des transstockeurs et des systèmes navettes avec ou sans guidage sur rails, des bras anthropomorphes, des buffers d'entrée et de sortie, des dispositifs automatiques ou semi-automatiques connectés en série ou en parallèle.

6. Utilisation de matériau inertisé selon le procédé de la revendication 1, en tant que matière première **caractérisée par** la forstérite et/ou l'olivine et/ou la larnite et/ou la bélite et/ou l'enstatite et/ou l'aegyrine et/ou la ferrosilite et/ou la magnétite et/ou l'hématite, pour la préparation de mélanges de poudres en une quantité comprise entre 20 % et 60 % avec de l'argile, de l'oxyde d'aluminium, des oxydes de silicium, de l'oxyde de magnésium, des oxydes de fer, des oxydes de calcium, de la chromite, du kaolin, du carbonate de magnésium, du carbonate de fer, de la magnésie calcinée, de la bauxite, de la chamotte, de la bentonite et des fondants dans diverses combinaisons, pour la production de briques réfractaires.

7. Utilisation du matériau inertisé selon le procédé de la revendication 1, en tant que matière première **caractérisée par** la forstérite et/o l'olivine et/ou la larnite et/ou la bélite et/o l'enstatite et/o l'aegyrine et/o la ferrosilite et/o la magnétite et/o l'hématite, pour la préparation de mélanges de poudres en une quantité comprise entre 5 % et 40 % avec des poudres à base de fer, carbone, cuivre, graphite, magnésium, bronze, laiton, étain, zinc, tungstène, molybdène, titane, zirconium et/ou avec des granulés d'acier inoxydable, et/ou avec des matériaux élastomères, des terpolymères, des résines, des chlorures de polyvinyle dans diverses combinaisons, pour la production d'alliages métalliques, de superalliages hautement alliés, de composites métal-céramique, de métaux réfractaires, de matériaux thermoplastiques, dans l'industrie de la métallurgie des poudres, de la métallurgie céramique, des nanotechnologies, des biotechnologies, des transports ferroviaires, aériens et routiers, dans l'ingénierie électrique et électronique, dans l'ingénierie balistique, nucléaire, aérospatiale, biomédicale, ainsi que dans l'industrie de l'armement, des équipements et systèmes de défense.

8. Utilisation du matériau inertisé selon le procédé de la revendication 1, en tant que matière première **caractérisée par** la forstérite et/ou l'enstatite, pour la production de bijoux et d'objets précieux dans l'industrie de la joaillerie.

9. Appareil pour l'inertisation de matériaux en Amiante/Ciment et/ou en Amiante de type Séprentine et/ou en Amiante de type Amphibole selon la revendication 1, **caractérisé en ce qu'**il comprend des Conteneurs étanches, réalisés en matériau composite durable et recyclable, constitués de et avec des alliages métalliques, ou des superalliages hautement alliés, ou de la tôle galvanisée, ou des polymères haute performance, ou un matériau plastique résistant à la chaleur, présentant des parois lisses et une double ouverture oléodynamique à la fois sur la partie supérieure et sur les côtés, identifiés par leur propre numéro de série préimprimé, munis de pieds fixes, de crochets pour le levage et la manutention, d'un système numérique de localisation et de suivi GPS, et présentant les dimensions suivantes : largeur de 1 à 2 mètres, longueur de 1 à 4 mètres, hauteur de 1 à 2 mètres ; à l'intérieur desquels sont disposés des Bacs destinés au confinement de matériau compact, réalisés en alliages métalliques et/ou en superalliages hautement alliés, durables et recyclables, équipés de supports d'ancrage, d'entretoises, de crochets à double articulation pour la manutention automatique ; ou, pour le confinement de matériau friable, des Bacs réalisés en alliage métallique à haut point de fusion, durables et recyclables, équipés de supports d'ancrage, d'entretoises, de crochets pour la manutention automatique, de bords de protection, et présentant les dimensions suivantes : largeur de 0,5 à 1,5 mètre, longueur de 1 à 4 mètres, hauteur de 3 à 10 centimètres ;
et comprenant les éléments suivants :
- une zone de réception définie pour les conteneurs scellés ;
- un système de navette pour le transfert des conteneurs hermétiques vers la zone fixe de ventilation passive ;
- des robots anthropomorphes pour l'ouverture des conteneurs scellés ;
- des moyens de transfert pour le déplacement de ces matériaux vers un convoyeur à bande se dirigeant vers un four de séchage ;
- des moyens d'aspiration et de lavage des conteneurs scellés dans les cuves de la section de récupération ;
- un système d'allocation par navette pour la distribution durant un cycle de collecte et de livraison des matériaux ;
- des moyens pour le déverrouillage de la section de sortie et l'activation du système de navette pour le transfert des conteneurs hermétiques vers la zone de stockage de l'installation ;
- la mise à jour de la base de données ;
- un système de refroidissement ;
- une chambre de dépression munie de moyens d'étanchéité ;
- des systèmes de dépoussiérage, d'aspiration et de filtration de l'air ;
- des moyens de fragmentation ;
- des moyens de broyage ;
- des convoyeurs à vis sans fin.
